# EUROPÄISCHE PATENTSCHRIFT

(11) **EP 2 188 755 B1**
(45) Veröffentlichungstag und Bekanntmachung des Hinweises auf die Patenterteilung: **18.10.2017**
(21) Anmeldenummer: 08774957.8
(22) Anmeldetag: 10.07.2008
(51) Int. Cl.: G06F 11/28, G06F 21/54, G06F 21/55

(54) **VERFAHREN UND VORRICHTUNG ZUR SICHERUNG EINES PROGRAMMS GEGEN EINE KONTROLLFLUSSMANIPULATION UND GEGEN EINEN FEHLERHAFTEN PROGRAMMABLAUF**
METHOD AND APPARATUS FOR PROTECTION OF A PROGRAM AGAINST MONITORING FLOW MANIPULATION AND AGAINST INCORRECT PROGRAM RUNNING
PROCÉDÉ ET DISPOSITIF DE PROTECTION D'UN PROGRAMME CONTRE UNE MANIPULATION DES FLUX DE CONTRÔLE ET CONTRE UN DÉROULEMENT ERRONÉ DU PROGRAMME

(30) Priorität: 16.08.2007 DE 102007038763
(43) Veröffentlichungstag der Anmeldung: 26.05.2010
(73) Patentinhaber: Siemens Aktiengesellschaft, 80333 München (DE)
(72) Erfinder: MEYER, Bernd, 81739 München (DE); SCHAFHEUTLE, Marcus, 81539 München (DE); SEUSCHEK, Hermann, 80634 München (DE)
(86) Internationale Anmeldenummer: PCT/EP2008/058980
(87) Internationale Veröffentlichungsnummer: WO 2009/021789

(56) Entgegenhaltungen:
- EP-A- 1 056 012
- WO-A-01/97010
- WO-A-03/042547
- WO-A-2005/073859
- DE-T2- 69 312 457
- US-A- 4 108 359
- US-A- 5 974 529
- US-A1- 2006 282 741
- US-B1- 7 168 065

## Beschreibung

Die Erfindung betrifft ein Verfahren und eine Vorrichtung zur Sicherung eines Programms gegen eine Kontrollflussmanipulation und dient zum Erkennen eines fehlerhaften Programmablaufs.

In sicherheitskritischen Programmapplikationen, die auf einer beliebigen Hardware ablaufen, besteht die Gefahr, dass ein Angreifer versucht, die Hardware, die die Programmapplikation ausführt, durch äußere Einwirkungen gezielt zu stören und dadurch den normalen Programmablauf zu ändern. Eine Veränderung des Programmablaufs kann bei einem kryptographischen Verfahren ausreichen, um Schlüssel, welche unter normalen Bedingungen sicher in einer Hardware gespeichert sind, zu extrahieren und somit ein kryptographisches System zu kompromittieren.

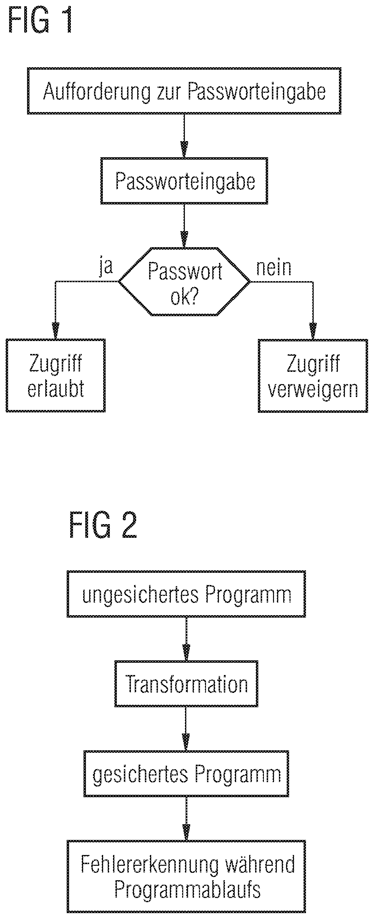

Figur 1 dient zur Darstellung der der Erfindung zugrundeliegenden Problematik.

Figur 1 zeigt ein Ablaufdiagramm der Passworteingabe bei einem herkömmlichen Datenverarbeitungssystem. Zunächst wird ein Nutzer aufgefordert, ein Passwort einzugeben. Nach erfolgter Passworteingabe wird das Passwort auf seine Korrektheit hin durch das Datenverarbeitungssystem geprüft. Ist das Passwort korrekt, wird ein Zugriff auf die Ressourcen des Datenverarbeitungssystems erlaubt. Bei einem fehlerhaften Passwort wird ein Datenzugriff verweigert.

Das in Figur 1 als Ablaufdiagramm dargestellte Programm ist beispielsweise in einem Prozessor zur Abarbeitung von Programmbefehlen, die in einer beliebigen Programmiersprache geschrieben sind, ausgeführt. Erfolgt ein Angriff auf die Hardware-Plattform bzw. den Prozessor kann zu demjenigen Zeitpunkt, an dem der Programmbefehl zur Überprüfung des Passwortes abgearbeitet wird, ein Angreifer erreichen, dass der Programmfluss des Programms derart manipuliert wird, dass trotz falscher Passwort-Eingabe ein Datenzugriff durch die Datenverarbeitungseinheit erlaubt wird, das heißt der Programmfluss falsch verzweigt.

Beispielsweise kann ein Angreifer mittels Laserblitzen zur Abarbeitung einzelner Instruktionen bzw. Programmbefehle gezielt zeitlich und räumlich derart stören, dass ein Kontrollfluss des ausgeführten Programms abgeändert wird. Dabei können beispielsweise einzelne Sprungbefehle oder auch Aufrufe von Unterprogrammen unterbunden werden.

Eine weitere Angriffsmöglichkeit besteht darin, Änderungen von berechneten Zwischenergebnissen hervorzurufen.

Die WO 2005/073859 A beschreibt ein Verfahren zum Kontrollieren eines Programmablaufs mittels einer Kontrollfluss-Markierungsfolge, welche zu bestimmten Programmablaufszeitpunkten mit einer erwarteten Kontrollfluss-Markierungsfolge verglichen wird. Stimmt die tatsächliche Kontrollfluss-Markierungsfolge nicht mit einer erwarteten Kontrollfluss-Markierungsfolge überein, erfolgt durch das Programm eine Ausnahmebehandlung.

Die US 7 168 065 B1 beschreibt ein Verfahren zur Überwachung eines Programmablaufs einer Befehlssequenz eines Computerprogramms. Die Programmbefehle werden analysiert und das Analyseergebnis wird durch ein Vergleichen mit Referenzdaten verifiziert.

Die US 2006/2 827 41 A1 beschreibt ein automatisiertes Verfahren zum Sichern von elektronischen Rechenschritten gegen Angriffe, welche zum Beispiel durch Bestrahlung von Rechenvorrichtungen herbeigeführt werden könnten.

Die DE 69 312 457 T2 beschreibt ein Verfahren zur Erfassung von Ausführungsfehlern eines Programms, wobei ein Ausführungsfehler gemeldet wird, wenn eine laufende Signatur nicht zu einer Gruppe von bereitgestellten Bezugssignaturen gehört.

Die WO 03/042547 A beschreibt ein Verfahren zur kontrollierten Programmausführung unter Verwendung eines Zustandszählers, welcher bei der Ausführung von kontrollierten Befehlssequenzabschnitten verändert wird.

Die WO 01 / 097 010 A offenbart ein Verfahren zur Sicherung eines Programms gegen eine Kontrollflussmanipulation auf Basis einer Befehlsadressenüberprüfung.

Es ist daher Aufgabe der vorliegenden Erfindung, ein Verfahren und eine Vorrichtung zu schaffen, welche die Sicherheit bei der Kontrolle eines Programmablaufs erhöhen.

Die Erfindung schafft ein Verfahren zur Sicherung des Programms gegen eine Kontrollflussmanipulation, wobei in mindestens eine aus Programmbefehlen bestehende Programmbefehlssequenz des Programms Sicherungs-Programmbefehle zur Erzeugung und Überprüfung einer Kontrollfluss-Markierungsfolge eingefügt werden, wobei eine Kontrollfluss-Markierung der Kontrollfluss-Markierungsfolge durch eine Befehlsadresse eines Programmbefehls gebildet wird, wobei ein Sicherungs-Programmbefehl jeweils einen Prüfwert berechnet, und wobei der Prüfwert jeweils über einen Teil mit einer konstanten Länge der bis zu diesem Zeitpunkt erzeugten Kontrollfluss-Markierungsfolge gebildet wird.

Bei einer Ausführungsform des erfindungsgemäßen Verfahrens wird eine Kontrollflussmarkierung der Kontrollfluss-Markierungsfolge durch eine Nummer, eine Zufallszahl, einen Zählwert, einen Befehls-Opcode eines Programmbefehls, eine Befehlsadresse eines Programmbefehls, einen Operanden eines Programmbefehls oder durch einen Zählwert eines Programmbefehlszählers gebildet.

Bei einer Ausführungsform des erfindungsgemäßen Verfahrens berechnet ein Sicherungs-Programmbefehl oder eine Sicherungs-Programmbefehlsfolge einen Prüfwert in Abhängigkeit von der Kontrollfluss-Markierungsfolge.

Bei einer Ausführungsform des erfindungsgemäßen Verfahrens wird der Prüfwert durch einen Hash-Wert gebildet.

Bei einer Ausführungsform des erfindungsgemäßen Verfahrens vergleicht ein Sicherungs-Programmbefehl oder eine Sicherungs-Programmbefehlsfolge den berechneten Prüfwert mit einem Referenzwert einer Referenz-Kontrollflussmarkierungsfolge oder prüft, ob der berechnete Prüfwert in einer Menge von Referenzwerten enthalten ist.

Bei einer Ausführungsform des erfindungsgemäßen Verfahrens wird der Referenzwert durch einen Referenzwert-Hash-Wert gebildet.

Die Erfindung schafft ferner eine Vorrichtung zur Sicherung eines Programms gegen Kontrollflussmanipulationen, wobei in mindestens eine aus Programmbefehlen bestehende Programmbefehlssequenz des Programms Sicherungs-Programmbefehle zur Erzeugung und Überprüfung einer Kontrollfluss-Markierungsfolge automatisch eingefügt werden, wobei eine Kontrollfluss-Markierung der Kontrollfluss-Markierungsfolge durch eine Befehlsadresse eines Programmbefehls gebildet wird, wobei ein Sicherungs-Programmbefehl jeweils einen Prüfwert berechnet, und wobei der Prüfwert jeweils über einen Teil mit einer konstanten Länge der bis zu diesem Zeitpunkt erzeugten Kontrollfluss-Markierungsfolge gebildet wird.

Die Erfindung schafft ferner ein Verfahren zum Erkennen eines fehlerhaften Programmablaufs eines Programms mit den Schritten:
- Erzeugen einer Kontrollfluss-Markierungsfolge während eines Programmablaufs des Programms, und
- Erkennen eines fehlerhaften Programmablaufs, wenn die erzeugte Kontrollfluss-Markierungsfolge nicht mit einer gespeicherten Referenz-Kontrollfluss-Markierungsfolge übereinstimmt oder wenn die erzeugte Kontrollfluss-Markierungsfolge nicht in einer Menge von gespeicherten Referenz-Kontrollfluss-Markierungsfolgen enthalten ist, wobei ein Prüfwert in Abhängigkeit von der erzeugten Kontrollfluss-Markierungsfolge berechnet wird und wobei der Prüfwert jeweils über einen Teil mit einer konstanten Länge der bis zu diesem Zeitpunkt erzeugten Kontrollfluss-Markierungsfolge gebildet wird.

Bei einer Ausführungsform des erfindungsgemäßen Verfahrens zum Erkennen eines fehlerhaften Programmablaufs besteht die Kontrollfluss-Markierungsfolge aus Kontrollfluss-Markierungen, die jeweils durch eine Nummer, eine Zufallszahl, einen Zählwert, einen Befehls-Opcode, eine Befehlsadresse, einen Operanden oder durch einen Befehls-Zählwert des Programmbefehlzählers gebildet wird.

Bei einer Ausführungsform des erfindungsgemäßen Verfahrens wird der fehlerhafte Programmablauf dann erkannt, wenn der berechnete Prüfwert nicht mit einem berechneten Referenzwert übereinstimmt oder wenn der berechnete Prüfwert nicht in einer Menge von berechneten Referenzwerten enthalten ist.

Die Erfindung schafft ferner eine Vorrichtung zum Erkennen eines fehlerhaften Programmablaufs eines Programms mit:
- einer Einrichtung zum Erzeugen einer Kontrollfluss-Markierungsfolge während eines Programmablaufs des Programms und mit
- einer Einrichtung zum Erkennen eines fehlerhaften Programmablaufs des Programms, wenn die erzeugte Kontrollfluss-Markierungsfolge nicht mit einer gespeicherten Referenz-Kontrollfluss-Markierungsfolge übereinstimmt oder wenn die erzeugte Kontrollfluss-Markierungsfolge nicht in einer Menge von gespeicherten Referenzfluss-Kontrollfluss-Markierungsfolgen enthalten ist, wobei die Einrichtung zum Erkennen eines fehlerhaften Programmablaufs ausgebildet ist, jeweils einen Prüfwert zu berechnen, wobei der Prüfwert jeweils über einen Teil mit einer konstanten Länge der bis zu diesem Zeitpunkt erzeugten Kontrollfluss-Markierungsfolge gebildet wird.

Die Erfindung schafft ferner ein Computerprogramm, das zur Sicherung gegen Kontrollfluss-Manipulationen eingefügte Sicherheitsprogramm-Befehle aufweist, die zur Erzeugung und Überprüfung einer Kontrollfluss-Markierungsfolge vorgesehen sind.

Bei einer Ausführungsform des erfindungsgemäßen Computerprogramms werden die Kontrollfluss-Markierungen einer Kontrollfluss-Markierungsfolge jeweils durch eine Nummer, eine Zufallszahl, einen Zählwert, einen Befehls-Opcode, eine Befehlsadresse, einen Operanden oder durch einen Befehlszählwert gebildet.

Die Erfindung schafft ferner einen Datenträger zum Speichern eines Computerprogramms, welches zur Sicherung gegen Kontrollflussmanipulationen eingefügte Sicherheitsprogramm-Befehle aufweist, die zur Erzeugung und Überprüfung einer Kontrollfluss-Markierungsfolge vorgesehen sind.

Im Weiteren werden Ausführungsformen des erfindungsgemäßen Verfahrens und der erfindungsgemäßen Vorrichtung zur Sicherung eines Programms gegen Kontrollfluss-Manipulationen und zur Erkennung eines fehlerhaften Programmablaufs unter Bezugnahme auf die beigefügten Figuren beschrieben.

Es zeigen:
- Figur 1:: ein Ablaufdiagramm zur Verdeutlichung der der Erfindung zugrundeliegenden Problematik;
- Figur 2:: ein Ablaufdiagramm zur Darstellung einer möglichen Vorgehensweise zur Sicherung des Programms gegen Kontrollfluss-Manipulationen und zur Erkennung eines fehlerhaften Programmablaufs gemäß der Erfindung;
- Figur 3:: ein Beispiel für einen Kontrollfluss eines zu sichernden Programms;
- Figur 4:: einen Kontrollfluss-Graphen für das in Figur 3 beispielhaft dargestellte Programm;
- Figur 5:: ein Beispiel für eine Generierung einer ReferenzKontrollfluss-Markierungsfolge gemäß einer Ausführungsform des erfindungsgemäßen Verfahrens;
- Figur 6:: ein Beispiel einer Kontrollfluss-Markierungsfolge bei einem aufgetretenen Fehler zur Erläuterung der Funktionsweise des erfindungsgemäßen Verfahrens;
- Figur 7:: ein weiteres Beispiel einer KontrollflussMarkierungsfolge bei einem aufgetretenen Fehler zur Erläuterung der Funktionsweise des erfindungsgemäßen Verfahrens;
- Figur 8:: ein Code-Listing zur Darstellung eines gemäß dem erfindungsgemäßen Verfahren gesicherten Computerprogramms.

Figur 2 zeigt die prinzipielle Vorgehensweise bei dem erfindungsgemäßen Verfahren zur Sicherung eines Programms gegen eine Kontrollfluss-Manipulation und zum Erkennen eines fehlerhaften Programmablaufs des Programms.

Zunächst wird ein ungesichertes Programm eingelesen. Das Programm besteht aus einer Vielzahl von Programmbefehlen, die entsprechend einem Kontrollfluss durch eine Hardware abgearbeitet werden. Diese Hardware besteht beispielsweise aus einem Mikroprozessor. Der Kontrollfluss des Programms weist neben sequenziellen abzuarbeitenden Programmteilen auch Programmverzweigungen auf.

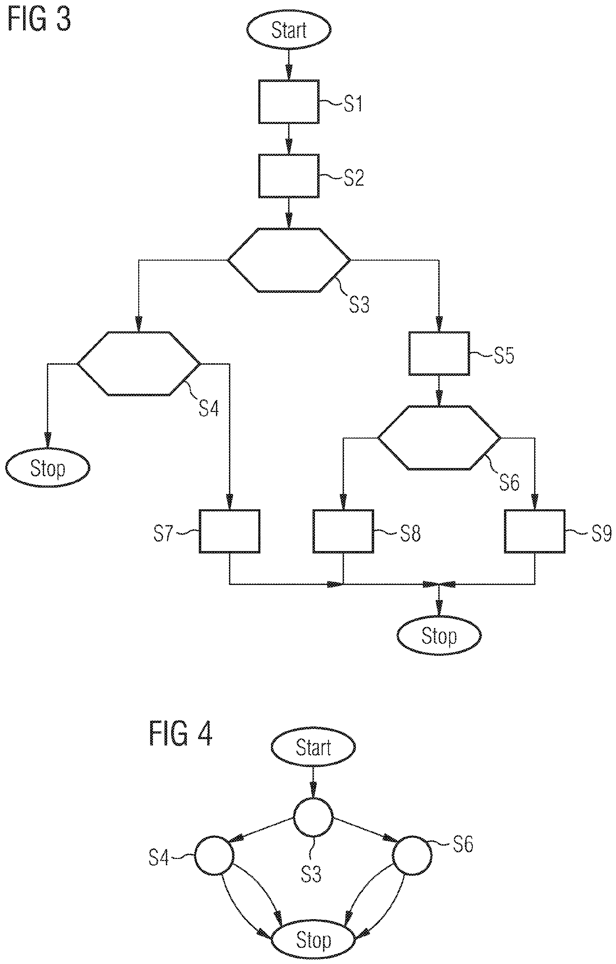

Figur 3 zeigt ein Ablaufdiagramm eines beispielhaften Computerprogramms, das aus mehreren Programmschritten S1-S9 besteht. Jeder der in Figur 3 dargestellten Programmschritte S1-S9 umfasst einen oder mehrere abzuarbeitende Programmbefehle. Figur 4 stellt einen zu dem in Figur 3 dargestellten Ablaufdiagramm zugehörigen Kontrollfluss-Graphen dar. Wie man aus Figuren 3, 4 erkennen kann, weist das dargestellte Beispielprogramm mehrere Programmverzweigungen S3, S4, S6 auf. Der Kontrollfluss des Programms gemäß Figur 3 ist in Figur 4 als gerichteter Graph dargestellt. Das Computerprogramm besteht aus sequenziell zu durchlaufenden Programmteilen, die als Kanten des Graphen dargestellt sind und aus Knoten, die Programmverzweigungen darstellen. Eine bestimmte Ausführung eines Programms kann daher als Pfad innerhalb des Kontrollfluss-Graphen dargestellt werden. Das erfindungsgemäße Verfahren erlaubt es, nach Ausführung des Programms festzustellen, welchen Pfad das Programm während seiner Ausführung durchlaufen hat.

Um dies zu ermöglichen, wird, wie in Figur 2 dargestellt ist, das ursprüngliche ungesicherte Computerprogramm zunächst in ein gesichertes Programm transformiert. Zur Sicherung des Programms gegen Kontrollfluss-Manipulationen wird dabei das ungesicherte Programm transformiert, indem in mindestens eine aus Programmbefehlen PB bestehende Programmbefehlssequenz des ungesicherten Programms Sicherungs-Programmbefehle (S-PB) zur Erzeugung und Überprüfung einer Kontrollfluss-Markierungsfolge eingefügt werden.

Zur Feststellung eines Ausführungspfades des Programms werden somit Testpunkte bzw. Kontrollfluss-Markierungen in die sequenziell ausgeführten Programmteile, welche den Kanten des Kontrollfluss-Graphen entsprechen, eingefügt. Dabei wird bei einer Ausführungsform in jedem sequenziell ausgeführten Programmteil mindestens ein Testpunkt bzw. eine Kontrollfluss-Markierung eingefügt.

Eine eingefügte Kontrollfluss-Markierung kann eine Nummer, eine Zufallszahl, ein Zählwert, ein Befehls-Opcode eines Programmbefehls, eine Befehlsadresse eines Programmbefehls, ein Operand eines Programmbefehls oder ein Zählwert eines Programmbefehlszählers sein. Die eingefügten Testpunkte bzw. Markierungen können beispielsweise einfach durchnummeriert sein. Ferner kann als Markierung die Adresse der an den Testpunkten aktuell eingefügten Instruktionen verwendet werden. Ferner ist es möglich, die ausgeführten Programmbefehle bzw. Instruktionen selbst oder deren Operanden als Markierungen zu verwenden. Weiterhin ist es möglich, dass Markierungen während der Erstellung des Programms zufällig generiert werden.

Bei einer Ausführungsform des erfindungsgemäßen Verfahrens zur Sicherung eines Programms gegen eine Kontrollfluss-Manipulation berechnet ein in die ursprüngliche Programmbefehlssequenz des Programms eingefügter Sicherungs-Programmbefehl oder eine Sicherungs-Programmbefehlsfolge einen Prüfwert in Abhängigkeit von der Kontrollfluss-Markierungsfolge. Dabei wird an jedem Testpunkt die Berechnung eines Prüfwertes durchgeführt, welche von mindestens einer Markierung eines vorhergehenden Testpunktes abhängt. Der berechnete Prüfwert kann beispielsweise durch einen Hash-Wert gebildet werden.

Bei einer Ausführungsform des erfindungsgemäßen Verfahrens wird der Prüfwert für die gesamte bis zu diesem Zeitpunkt erzeugte Kontrollfluss-Markierungsfolge gebildet.

Bei einer alternativen Ausführungsform des erfindungsgemäßen Verfahrens zur Sicherung eines Programms gegen eine Kontrollfluss-Manipulation wird der Prüfwert über einen Teil mit einer konstanten Länge der bis zu diesem Zeitpunkt erzeugten Kontrollfluss-Markierungsfolge gebildet.

Bei einer Ausführungsform des erfindungsgemäßen Verfahrens zur Sicherung eines Programms gegen eine Kontrollfluss-Manipulation vergleicht ein eingefügter Sicherungs-Programmbefehl oder eine Sicherungs-Programmbefehlsfolge S-PB den berechneten Prüfwert, der beispielsweise aus einem Hash-Wert besteht, mit einem Referenzwert einer Referenz-Kontrollfluss-Markierungsfolge. Stimmen der berechnete Prüfwert und der Referenzwert überein, dann wurde der Ausführungspfad des Computerprogramms eines Programmteils mit einer großen Wahrscheinlichkeit in der richtigen Reihenfolge durchlaufen. Stimmen der berechnete Prüfwert und der Referenzwert nicht überein, besteht eine große Wahrscheinlichkeit, dass ein Ausführungsfehler des Programms vorliegt.

Bei einer möglichen Ausführungsform des erfindungsgemäßen Verfahrens zur Sicherung eines Programms gegen eine Kontrollfluss-Manipulation prüft ein Sicherungs-Programmbefehl oder eine Sicherungs-Programmbefehlsfolge, ob der berechnete Prüfwert in einer Menge von vorgegebenen Referenzwerten enthalten ist. Bei diesen Referenzwerten kann es sich beispielsweise um Referenz-Hash-Werte handeln.

In Abhängigkeit von dem verwendeten Verfahren zur Berechnung des Prüfwertes kann ein Teil des Ausführungspfades des Programms lokal verifiziert werden.

Bei einer Ausführungsform des erfindungsgemäßen Verfahrens hängt der berechnete Prüfwert von einer festen Anzahl unmittelbar zuvor durchlaufener Testpunkte ab.

Bei einer alternativen Ausführungsform des erfindungsgemäßen Verfahrens hängt der Prüfwert von den Markierungen des gesamten bisher durchlaufenen Ausführungspfades ab. Falls der gesamte bisherige Ausführungspfad eines Programms überprüft wird, ergibt sich als Vorteil, dass eine Verifikation des Kontrollflusses bei einer Applikation auf viele Testpunkte verteilt wird. Damit werden auch Angriffe, welche mit Hilfe exakt justierter Attacken versuchen, einzelne Vergleiche von Prüf- und Referenzwerten zu umgehen, mit einer hohen Wahrscheinlichkeit an einem anderen Testpunkt erkannt.

Das durch Einfügen von Sicherungs-Programmbefehlen S-PB gesicherte Programm ermöglicht es, während eines Ablaufs eines Programms eine Manipulation des Programm-Kontrollflusses zu erkennen.

Hierzu wird während des Ablaufs des gesicherten Computerprogramms, welche die eingefügten Sicherungs-Programmbefehle beinhaltet, eine Kontrollfluss-Markierungsfolge während des Programmablaufs erzeugt.

Ein fehlerhafter Programmablauf wird erkannt, wenn die dabei erzeugte Kontrollfluss-Markierungsfolge nicht mit einer gespeicherten Referenz-Kontrollfluss-Markierungsfolge übereinstimmt oder wenn die erzeugte Kontrollfluss-Markierungsfolge nicht in einer Menge von vorab gespeicherten Referenz-Kontrollfluss-Markierungsfolgen enthalten ist.

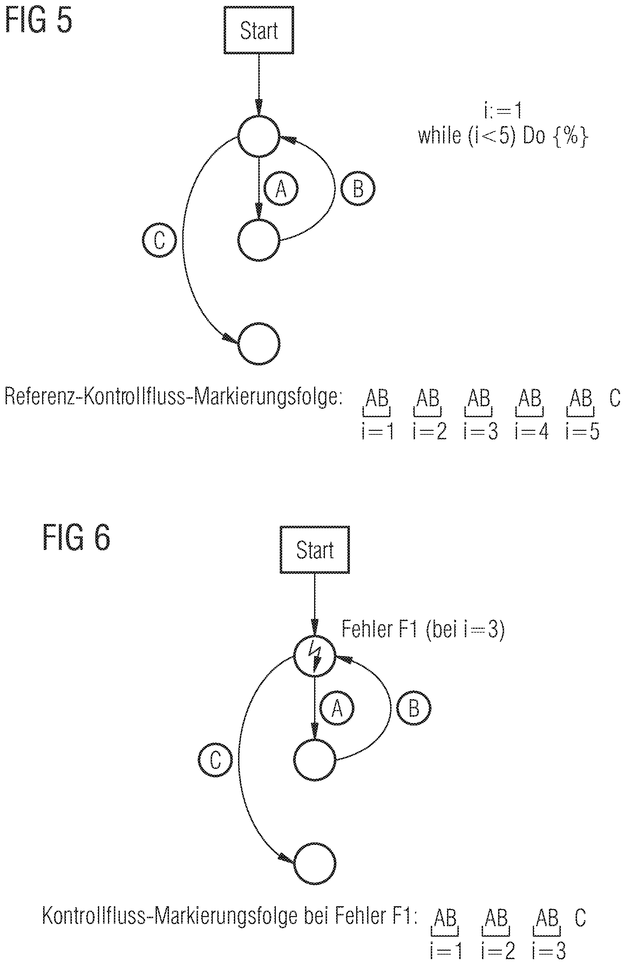

Figur 5 zeigt einen Kontrollfluss-Graphen eines einfachen Computerprogramms zur Erläuterung des erfindungsgemäßen Verfahrens. Bei dem Computerprogramm handelt es sich um eine einfache Schleife. Solange ein Zählwert i < 5 ist, wird eine bestimmte Berechnung vorgenommen. Die Kanten des Kontrollfluss-Graphen stellen einen sequenziell abzuarbeitenden Programmteil dar und die Knoten entsprechen Programmverzweigungen.

Im Normalfall, ohne Manipulation werden die Kanten A, B, C mit der zugehörigen nachfolgenden Referenz-Kontrollfluss-Markierungsfolge abgearbeitet: AB AB AB AB AB C.

Das bedeutet, dass die Schleife, welche aus den Kanten AB besteht, fünfmal durchlaufen wird und anschließend über die Kante C zum Ende des Programms gesprungen wird. Jedes Programm bzw. jeder Programmteil weist eine feststellbare Referenz-Kontrollfluss-Markierungsfolge auf, welche den korrekten Programmablauf wiedergibt.

Figur 6 zeigt eine Kontrollfluss-Markierungsfolge bei einem Auftreten eines Fehlers F1 bei einem dritten Durchlauf der in Figur 5 dargestellten Programmschleife.

Die Kontrollfluss-Markierungsfolge bei Auftreten des Fehlers F1 lautet: AB AB AB C.

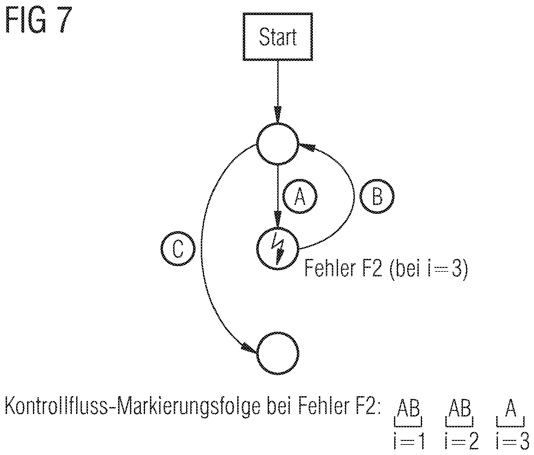

Figur 7 zeigt eine Kontrollfluss-Markierungsfolge bei Auftreten eines Fehlers F2 am Ende der Schleife in der dritten Iteration (i = 3). Die Kontrollfluss-Markierungsfolge lautet bei Auftreten des Fehlers F2: AB AB A.

Wie man aus den Beispielen in Figuren 6, 7 erkennen kann, weist jeder an einer Programmverzweigung eines Computerprogramms auftretende Fehler F eine typische bzw. kennzeichnende Kontrollfluss-Markierungsfolge auf, die von der Referenz-Kontrollfluss-Markierungsfolge des fehlerfrei ablaufenden Programms abweicht.

Zur Fehlererkennung werden daher bei dem erfindungsgemäßen Verfahren Sicherungsprogramm-Befehle S-PB in den Programmcode des ursprünglichen Computerprogramms eingefügt.

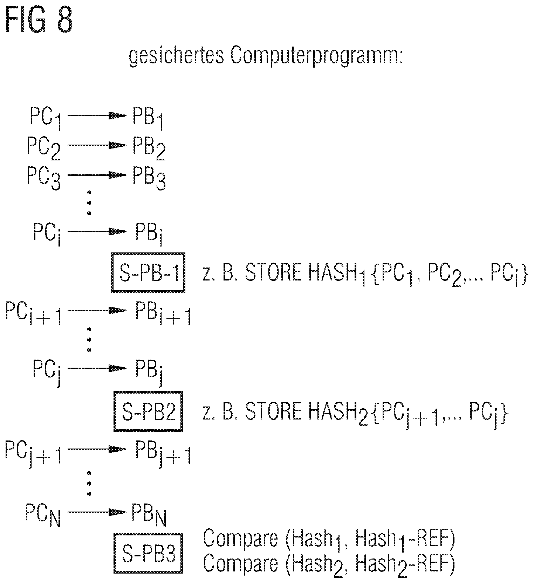

Figur 8 zeigt schematisch ein mit Sicherungsprogramm-Befehlen S-PB gesichertes Computerprogramm, welches gegen Kontrollfluss-Manipulationen gesichert ist. Ein Programmzähler bzw. Programm-Counter PC zeigt auf die abzuarbeitenden Programmbefehle PB. An Testpunkten werden die Sicherungs-Programmbefehle in den Programmablauf eingefügt. Die Sicherungs-Programmbefehle S-PB berechnen beispielsweise einen Prüfwert in Abhängigkeit von einer Kontrollfluss-Markierungsfolge. Bei dem in Figur 8 dargestellten Beispiel berechnet der Sicherungs-Programmbefehl S-PB-1 einen Hash-Wert als Prüfwert in Abhängigkeit von einer Kontrollfluss-Markierungsfolge, die aus einer Menge von Kontrollfluss-Markierungen besteht. Bei dem in Figur 8 dargestellten Beispiel bestehen die Kontrollfluss-Markierungen aus den Programmbefehlszählwerten des Programmbefehlszählers bzw. des Programm-Counters PC der vorangehenden Programmbefehle PC₁ bis PCᵢ.

An einem weiteren Testpunkt ist ein weiterer Sicherungs-Programmbefehl S-PB2 vorgesehen, welcher ebenfalls einen Hash-Wert als Prüfwert in Abhängigkeit von Kontrollfluss-Markierungen berechnet. Die Kontrollfluss-Markierungen werden bei diesem zweiten Sicherungsprogrammbefehl S-PB2 ebenfalls durch Programmbefehlszählwerte PC von vorangehenden Programmbefehlen gebildet (PCᵢ₊₁ ... PCⱼ).

Ein weiterer Sicherungsprogrammbefehl S-PB3 vergleicht den durch den ersten Sicherungsprogrammbefehl S-PB1 ermittelten und gespeicherten Prüfwert, das heißt den Hash-Wert HASH₁ mit einem Referenzwert HASH₁-REF. Ferner vergleicht der dritte Sicherungs-Programmbefehl S-PB3 den durch den zweiten Sicherungs-Programmbefehl S-PB2 berechneten Prüfwert HASH₂ mit einem Referenzwert HASH₂-REF.

Bei dem in Figur 8 dargestellten Ausführungsbeispiel vergleicht der Sicherungs-Programmbefehl S-PB3 den berechneten Prüfwert mit einem Referenzwert einer Referenz-Kontrollfluss-Markierungsfolge.

Bei einer alternativen Ausführungsform kann geprüft werden, ob die berechneten Prüfwerte, beispielsweise HASH₁, HASH₂ in einer Menge von vorgegebenen abgespeicherten Referenzwerten enthalten sind oder nicht.

Bei einer möglichen Ausführungsform des erfindungsgemäßen Verfahrens wird der Prüfwert durch die Sicherungs-Programmbefehle für die gesamte bis zu diesem Zeitpunkt erzeugte Kontrollfluss-Sicherungsfolge gebildet.

Bei einer alternativen Ausführungsform des erfindungsgemäßen Verfahrens wird der Prüfwert über einen Teil mit einer konstanten Länge der bis zu diesem Zeitpunkt erzeugten Kontrollfluss-Markierungsfolge gebildet. Ein Programmbefehl PB kann beispielsweise durch einen Programmbefehl oder eine Programmbefehlsfolge in einer Assembler-Programmiersprache gebildet werden.

Ein Programmbefehlszähler bzw. Programm-Counter PC innerhalb der CPU zeigt auf eine Speicheradresse eines Programmspeichers an der der als nächste abarbeitende Programmbefehl abgelegt ist.

Ein Beispiel für einen Assembler-Programmbefehl, beispielsweise zum Speichern eines Wertes X einer Variablen in einem Register R1, ist:
MOV R1, X.

Der Programmbefehl weist einen Befehls-Opcode MOV sowie Operanden auf.

Als Markierung kann beispielsweise die Adresse der aktuell an den Testpunkten eingeführten Instruktionen bzw. Programmbefehle verwendet werden. Alternativ ist auch die Verwendung des Programmbefehls bzw. der Instruktionen selbst und/oder der Parameter des Programmbefehls möglich. Wird beispielsweise die Adresse des Programmzählers verwendet, kann der Prüfwert unter Verwendung eines Unterprogramm-Aufrufs berechnet werden, da bei der Durchführung eines Unterprogramm-Aufrufs normalerweise der aktuelle Wert des Programmzählers auf einen Stack des Mikrocontrollers gelegt wird. Wird das erfindungsgemäße Verfahren auf ein Programm angewendet, welches während seiner Laufzeit verschoben wird und daher die Testpunkte zur Zeit der Programmerstellung keine festen Adressen aufweisen, so kann die Berechnung der Adressen des Programmzählers relativ zu einem festen Punkt beispielsweise zum Anfang oder relativ zum Ende des ausgeführten Programms erfolgen.

Werden die Markierungen der Testpunkte unabhängig von den Instruktionen bzw. Programmbefehlen oder deren Adressen bestimmt, so lassen sich auch zugehörige Prüfwerte relativ einfach zur Zeit der Programmerstellung vorberechnen. Es ist außerdem bei einer Ausführungsform möglich, verschiedene Testpunkte mit der gleichen Markierung zu versehen und auf diese Weise die jeweiligen zugehörigen sequenziellen Programmteile bezüglich der beschriebenen Vorgehensweise ununterscheidbar zu machen.

Bei einer Ausführungsform des erfindungsgemäßen Verfahrens, bei der Adressen und/oder Programmbefehle bzw. Instruktionen als Kontrollfluss-Markierungen verwendet werden, ist die Bestimmung der Prüfwert aufwändiger, da sich die konkreten Werte mit jeder Änderung des Programms oder mit jedem Übersetzungsvorgang durch einen Assembler oder Compiler eines Entwicklungs-Tools ändern und daher angepasst werden müssen.

Bei einer möglichen Ausführungsform des erfindungsgemäßen Verfahrens berechnen eingefügte Sicherungs-Programmbefehle einen Hash-Wert als Prüfwert. Die Hash-Funktionen bzw. die Hash-Funktionen der berechneten Hash-Werte weisen eine hinreichende Resistenz gegen Kollisionen auf. Dabei werden die Hash-Funktionen derart gewählt, dass sichergestellt ist, dass Kollisionen von Prüfwerten verschiedener Testpunkte hinreichend selten sind. Dies ermöglicht, das Durchlaufen der Testpunkte zu unterscheiden.

Bei einer möglichen Ausführungsform des erfindungsgemäßen Verfahrens wird ein Prüfwert berechnet, welcher nur einen Teil des durchlaufenen Ausführungspfades des Programms lokal verifiziert. Es kann beispielsweise eine konstante Anzahl der zuletzt durchlaufenen Markierungen zwischengespeichert werden und die Berechnung der Prüfwerte lediglich bezogen auf diese zwischengespeicherten Markierungen erfolgen. Die zwischengespeicherten Markierungen bzw. Kontrollfluss-Markierungen werden dann während der Programmausführung wie ein Fenster über die Markierung des bisher durchlaufenen Ausführungspfades des Programms geschoben.

Bei weiteren Ausführungsvarianten bzw. Ausführungsbeispielen werden unter Miteinbezug der Hardware bzw. des die Programmbefehle abarbeitenden Mikroprozessors beispielsweise Hardware-Zähler eingesetzt, welche unabhängig von den ausgeführten Instruktionen den Takt des Mikroprozessors mitzählen.

Bei einer Ausführungsform des erfindungsgemäßen Verfahrens wird ein solcher Hardware-Zähler zu Beginn der Programmausführung initialisiert und anschließend wird der Hardware-Zähler während der Ausführung der Applikation bzw. des Computerprogramms frei laufen gelassen, wobei der aktuelle Zählerstand zu den Zeitpunkten der Berechnung der Prüfwerte als Kontrollfluss-Markierung verwendet wird. Bei einer Ausführungsform ist es notwendig, dass die Ausführungszeiten der verschiedenen Instruktionen bzw. Programmbefehle des Mikrocontrollers konstant sind, um reproduzierbare Zählerstände der verschiedenen Programmdurchläufe zu erzielen. Darüber hinaus darf bei dieser Ausführungsform das Computerprogramm bzw. die Software keine Programmteile aufweisen, die nicht deterministische Seiteneffekte haben, wie beispielsweise Interrupt-Routinen oder Programmteile, die Ports auf externe Ereignisse pollen. Darüber hinaus ist bei dieser Ausführungsform notwendig, dass die verschiedenen sequentiell durchlaufenen Programmteile bzw. Teilstücke des Kontrollfluss-Graphen der Applikation bzw. des Programms unterschiedliche Laufzeiten besitzen oder zumindest die Berechnung der Prüfwerte in den verschiedenen sequenziell durchlaufenen Teilstücken bzw. Programmteile zu verschiedenen Zeitpunkten bezüglich der jeweiligen Zählerstände geschieht, damit die sequenziellen Teilstücke bzw. Programmteile durch die berechneten Prüfwerte auch unterscheidbar sind und Fehlerangriffe sicher erkannt werden können.

Das erfindungsgemäße Verfahren führt eine direkte Verifizierung eines Ausführungspfades eines gesicherten Programms durch. Dabei wird ein Schutz vor Fehlern in der Programmausführung des Programms an die Daten, welche die Applikation bzw. das Programm bearbeitet, gekoppelt. Das erfindungsgemäße Verfahren ist unabhängig von einer Redundanz in den von der Applikation berechneten Daten und auch unabhängig von berechneten Zwischenergebnissen.

Das erfindungsgemäße Verfahren zur Sicherung eines Programms gegen eine Kontrollfluss-Manipulation und zum Erkennen eines fehlerhaften Programmablaufs des Programms weist insbesondere den Vorteil auf, dass Sicherungs-Programmbefehle zur Sicherung des Programms auch nachträglich in bereits bestehende Programme bzw. Applikationen integrierbar bzw. automatisch einfügbar sind. So muss lediglich der Kontrollfluss-Graph des jeweiligen Programms bekannt sein. Zur Implementierung der Schutzmaßnahmen ist es daher bei einer Ausführungsform ausreichend, an den gewünschten Testpunkten Sicherungs-Programmbefehle einzufügen oder einen Aufruf eines geeigneten Unterprogramms zur Berechnung und Verifikation eines Prüfwertes einzufügen.

Ein weiterer Vorteil des erfindungsgemäßen Verfahrens besteht im Gegensatz zu herkömmlichen Schutzmechanismen durch Redundanz innerhalb der gespeicherten Daten bzw. durch Invarianten von berechneten Zwischenergebnissen darin, dass auch Angriffe, welche versuchen, die Anzahl von Schleifenausführungen zu ändern, um dadurch berechnete Zwischenergebnisse zu manipulieren, sicher erkannt werden.

Ein weiterer Vorteil des erfindungsgemäßen Verfahrens besteht darin, dass zum Einfügen der Sicherungs-Programmbefehle verschiedene Sicherheits-Niveaus skalierbar sind bzw. in dem Verfahren die Sicherheitsbedürfnisse der zu schützenden Applikationen bzw. des zu schützenden Programms berücksichtigt werden kann. In Abhängigkeit von der verwendeten Hardware und einem Fehlermodell lässt sich die Wahrscheinlichkeit, mit der Fehler in einem Kontrollfluss eines Programms erkannt werden, durch die Art und Größe der verwendeten Kontrollfluss-Markierungen und der Prüfwerte sowie durch die Verfahren zur Berechnung der Prüfwerte einstellen. Ferner lassen sich Verfahren einsetzen, welche eine Abfolge von irregulären, zufällig erscheinenden Prüfwerten erzeugen, welche schwieriger durch einen Angriff manipulierbar sind als beispielsweise ein Schleifenzähler.

Das erfindungsgemäße Verfahren ist insbesondere zur Absicherung von Implementierungen kryptographischer Algorithmen gegen Fehlerangriffe geeignet. Um Stromanalysen und Analysen der Ausführungszeit von kryptographischen Algorithmen zu unterbinden, werden diese Algorithmen normalerweise derart implementiert, dass die Implementierung weder datenabhängige Verzweigungen noch datenabhängige Ausführungszeiten besitzt. Ein Ausführungspfad hängt daher bei solchen Implementierungen lediglich von der Länge der Input-Daten ab und nicht von einem konkreten Wert der Input-Daten. Daher weisen derartige Algorithmen einen festen Ausführungspfad auf, welcher mit dem erfindungsgemäßen Verfahren leicht verifizierbar ist.

Das erfindungsgemäße Verfahren erlaubt, durch geringfügige Änderungen der Software bzw. des Programms eine zu schützende Applikation und einen korrekten Kontrollfluss des Programms sicherzustellen. Das gesicherte Programm ist in der Lage, mit einer großen Wahrscheinlichkeit selbstständig zu verifizieren, dass alle für die korrekte Programmausführung notwendigen bzw. relevanten Programmteile in der richtigen Reihenfolge aufgeführt werden. Zudem kann sichergestellt werden, dass Programmschleifen mit der richtigen Anzahl durchlaufen werden. Das erfindungsgemäße Verfahren schützt ein Programm insbesondere vor Angriffen, welche versuchen, die Ausführung von Schleifen, von Sprüngen oder von Unterprogramm-Aufrufen zu stören oder zu verhindern.

## Patentansprüche

1. Verfahren zur Sicherung eines Programms gegen eine Kontrollflussmanipulation,
wobei in mindestens eine aus Programmbefehlen (PB) bestehende Programmbefehlssequenz des Programms Sicherungs-Programmbefehle (S-PB) zur Erzeugung und Überprüfung einer Kontrollfluss-Markierungsfolge eingefügt werden,
wobei eine Kontrollfluss-Markierung der Kontrollfluss-Markierungsfolge durch eine Befehlsadresse eines Programmbefehls gebildet wird;
wobei ein Sicherungs-Programmbefehl (S-PB) jeweils einen Prüfwert berechnet; und
wobei der Prüfwert jeweils über einen Teil mit einer konstanten Länge der bis zu diesem Zeitpunkt erzeugten Kontrollfluss-Markierungsfolge gebildet wird.

2. Verfahren nach Anspruch 1,
wobei der Prüfwert durch einen Hash-Wert (HASH) gebildet wird.

3. Verfahren nach Anspruch 1,
wobei ein Sicherungs-Programmbefehl (S-PB) den berechneten Prüfwert mit einem Referenzwert einer Referenz-Kontrollfluss-Markierungsfolge vergleicht oder prüft, ob der berechnete Prüfwert in einer Menge von Referenzwerten enthalten ist.

4. Verfahren nach Anspruch 3,
wobei der Referenzwert durch einen Referenz-Hash-Wert (HASH-REF) gebildet wird.

5. Vorrichtung zur Sicherung eines Programms gegen Kontrollflussmanipulationen,
wobei in mindestens eine aus Programmbefehlen (PB) bestehende Programmbefehlssequenz des Programms Sicherungs-Programmbefehle (S-PB) zur Erzeugung und Überprüfung einer Kontrollfluss-Markierungsfolge automatisch eingefügt werden, wobei eine Kontrollfluss-Markierung der Kontrollfluss-Markierungsfolge durch eine Befehlsadresse eines Programmbefehls gebildet wird;
wobei ein Sicherungs-Programmbefehl (S-PB) jeweils einen Prüfwert berechnet; und
wobei der Prüfwert jeweils über einen Teil mit einer konstanten Länge der bis zu diesem Zeitpunkt erzeugten Kontrollfluss-Markierungsfolge gebildet wird.

6. Verfahren zum Erkennen eines fehlerhaften Programmablaufs eines Programms mit den folgenden Schritten:
(a) Erzeugen einer Kontrollfluss-Markierungsfolge während eines Programmablaufs des Programms, wobei eine Kontrollfluss-Markierung der Kontrollfluss-Markierungsfolge durch eine Befehlsadresse eines Programmbefehls gebildet wird;
(b) Erkennen eines fehlerhaften Programmablaufs, wenn die erzeugte Kontrollfluss-Markierungsfolge nicht mit einer gespeicherten Referenz-Kontrollfluss-Markierungsfolge übereinstimmt oder wenn die erzeugte Kontrollfluss-Markierungsfolge nicht in einer Menge von gespeicherten Referenz-Kontrollfluss-Markierungsfolgen enthalten ist;
wobei ein Prüfwert in Abhängigkeit von der erzeugten Kontrollfluss-Markierungsfolge berechnet wird; und
wobei der Prüfwert jeweils über einen Teil mit einer konstanten Länge der bis zu diesem Zeitpunkt erzeugten Kontrollfluss-Markierungsfolge gebildet wird.

7. Verfahren nach Anspruch 6,
wobei der Prüfwert durch einen Hash-Wert (HASH) gebildet wird.

8. Verfahren nach Anspruch 6,
wobei ein Referenzwert in Abhängigkeit von einer Referenz-Kontrollfluss-Markierungsfolge berechnet wird.

9. Verfahren nach Anspruch 6,
wobei der Referenzwert durch einen Referenz-Hash-Wert (HASH-REF) gebildet wird.

10. Verfahren nach Anspruch 6 und 8,
wobei ein fehlerhafter Programmablauf erkannt wird, wenn der berechnete Prüfwert nicht mit dem berechneten Referenzwert übereinstimmt oder wenn der berechnete Prüfwert nicht in einer Menge von berechneten Referenzwerten enthalten ist.

11. Vorrichtung zum Erkennen eines fehlerhaften Programmablaufs eines Programms mit:
a) einer Einrichtung zum Erzeugen einer Kontrollfluss-Markierungsfolge während eines Programmablaufs des Programms, wobei eine Kontrollfluss-Markierung der Kontrollfluss-Markierungsfolge durch eine Befehlsadresse eines Programmbefehls gebildet wird;
b) einer Einrichtung zum Erkennen eines fehlerhaften Programmablaufs des Programms, wenn die erzeugte Kontrollfluss-Markierungsfolge nicht mit einer gespeicherten Referenz-Kontrollfluss-Markierungsfolge übereinstimmt oder wenn die erzeugte Kontrollfluss-Markierungsfolge nicht in einer Menge von gespeicherten Referenz-Kontrollfluss-Markierungsfolgen enthalten ist, wobei die Einrichtung zum Erkennen eines fehlerhaften Programmablaufs ausgebildet ist, jeweils einen Prüfwert zu berechnen, wobei der Prüfwert jeweils über einen Teil mit einer konstanten Länge der bis zu diesem Zeitpunkt erzeugten Kontrollfluss-Markierungsfolge gebildet wird.

12. Computerprogramm, das zur Sicherung gegen Kontrollfluss-Manipulationen eingefügte Sicherungsprogramm-Befehle aufweist, die zur Erzeugung und Überprüfung einer Kontrollfluss-Markierungsfolge vorgesehen sind, wobei eine Kontrollfluss-Markierung der Kontrollfluss-Markierungsfolge durch eine Befehlsadresse eines Programmbefehls gebildet wird und wobei ein Sicherungs-Programmbefehl (S-PB) jeweils einen Prüfwert berechnet, und wobei der Prüfwert jeweils über einen Teil mit einer konstanten Länge der bis zu diesem Zeitpunkt erzeugten Kontrollfluss-Markierungsfolge gebildet wird.

13. Datenträger, auf dem ein Computerprogramm nach Anspruch 12 gespeichert ist.

## Claims

1. Method of protecting a program against control flow manipulation,
wherein protect program commands (S-PB) for generating and checking a control flow flag sequence are inserted into at least one program command sequence of program commands (PB) of the program,
wherein a control flow flag of the control flow flag sequence is formed by a command address of a program command;
wherein a protect program command (S-PB) calculates a check value in each case; and
wherein the check value is formed over a part of constant length of the control flow flag sequence generated up to this instant in each case.

2. Method according to claim 1,
wherein the check value is formed by a hash value (HASH).

3. Method according to claim 1,
wherein a protect program command (S-PB) compares the calculated check value with a reference value of a reference control flow flag sequence or checks whether the calculated check value is contained in a set of reference values.

4. Method according to claim 3,
wherein the reference value is formed by a reference hash value (HASH-REF).

5. Apparatus for protecting a program against control flow manipulation,
wherein protect program commands (S-PB) for generating and checking a control flow flag sequence are automatically inserted into at least one program command sequence of program commands (PB) of the program;
wherein a control flow flag of the control flow flag sequence is formed by a command address of a program command;
wherein a protect program command (S-PB) calculates a check value in each case; and
wherein the check value is formed over a part of constant length of the control flow flag sequence generated up to this instant in each case.

6. Method of detecting an incorrect program flow of a program comprising the following steps:
(a) generate a control flow flag sequence during a program flow of the program, wherein a control flow flag of the control flow flag sequence is formed by a command address of a program command;
(b) detect an incorrect program flow if the generated control flow flag sequence does not match a stored reference control flow flag sequence or if the generated control flow flag sequence is not contained in a set of stored reference control flow flag sequences;
wherein a check value is calculated as a function of the generated control flow flag sequence; and
wherein the check value is formed over a part of constant length of the control flow flag sequence generated up to this instant in each case.

7. Method according to claim 6,
wherein the check value is formed by a hash value (HASH).

8. Method according to claim 6,
wherein a reference value is calculated as a function of a reference control flow flag sequence.

9. Method according to claim 6,
wherein the reference value is formed by a reference hash value (HASH-REF).

10. Method according to claim 6 and 8
wherein an incorrect program flow is detected if the calculated check value does not match the calculated reference value or if the calculated check value is not contained in a set of calculated reference values.

11. Apparatus for detecting an incorrect program flow of a program comprising:
a) a device for generating a control flow flag sequence during a program flow of the program, wherein a control flow flag of the control flow flag sequence is formed by a command address of a program command;
b) a device for detecting an incorrect program flow of the program if the generated control flow flag sequence does not match a stored reference control flow flag sequence or if the generated control flow flag sequence is not contained in a set of stored reference control flow flag sequences, wherein the device for detecting an incorrect program flow is embodied to a calculate a check value in each case, wherein the check value is formed over a part of constant length of the control flow flag sequence generated up to this instant in each case.

12. Computer program, which for protecting against control flow manipulation has inserted protect program commands that are provided for generating and checking a control flow flag sequence, wherein a control flow flag of the control flow flag sequence is formed by a command address of a program command and wherein a protect program command (S-PB) calculates a check value in each case, and wherein the check value is formed over a part of constant length of the control flow flag sequence generated up to this instant in each case.

13. Data carrier, on which a computer program according to claim 12 is stored.

## Revendications

1. Procédé de sécurisation d'un programme contre une manipulation du flux de contrôle, des instructions de programme de sécurisation (S-PB) étant insérées dans au moins une séquence d'instructions de programme du programme composée d'instructions de programme (PB) pour générer et vérifier une séquence de marquage de flux de contrôle,
un marquage de flux de contrôle de la séquence de marquage de flux de contrôle étant constitué par une adresse d'instruction d'une instruction de programme ; une instruction de programme de sécurisation (S-PB) calculant respectivement une valeur de contrôle et
la valeur de contrôle étant constituée respectivement par l'intermédiaire d'une partie de longueur constante de la séquence de marquage de flux de contrôle générée jusqu'à cet instant.

2. Procédé selon la revendication 1, la valeur de contrôle étant constituée par une valeur de hachage (HASH).

3. Procédé selon la revendication 1, une instruction de programme de sécurisation (S-PB) comparant la valeur de contrôle calculée avec une valeur de référence d'une séquence de marquage de flux de contrôle de référence ou vérifiant si la valeur de contrôle calculée est contenue dans un ensemble de valeurs de référence.

4. Procédé selon la revendication 3, la valeur de référence étant constituée par une valeur de hachage de référence (HASH-REF).

5. Dispositif de sécurisation d'un programme contre des manipulations du flux de contrôle,
des instructions de programme de sécurisation (S-PB) étant insérées automatiquement dans au moins une séquence d'instructions de programme du programme composée d'instructions de programme (PB) pour générer et vérifier une séquence de marquage de flux de contrôle,
un marquage de flux de contrôle de la séquence de marquage de flux de contrôle étant constitué par une adresse d'instruction d'une instruction de programme ; une instruction de programme de sécurisation (S-PB) calculant respectivement une valeur de contrôle et
la valeur de contrôle étant constituée respectivement par l'intermédiaire d'une partie de longueur constante de la séquence de marquage de flux de contrôle générée jusqu'à cet instant.

6. Procédé d'identification d'un déroulement de programme erroné d'un programme, comportant les étapes suivantes :
(a) génération d'une séquence de marquage de flux de contrôle pendant un déroulement de programme du programme, un marquage de flux de contrôle de la séquence de marquage de flux de contrôle étant constitué par une adresse d'instruction d'une instruction de programme ;
(b) identification d'un déroulement de programme erroné lorsque la séquence de marquage de flux de contrôle générée ne coïncide pas avec une séquence de marquage de flux de contrôle de référence mise en mémoire ou lorsque la séquence de marquage de flux de contrôle générée n'est pas contenue dans un ensemble de séquences de marquage de flux de contrôle de référence mises en mémoire,
une valeur de contrôle étant calculée en fonction de la séquence de marquage de flux de contrôle générée et la valeur de contrôle étant constituée respectivement par l'intermédiaire d'une partie de longueur constante de la séquence de marquage de flux de contrôle générée jusqu'à cet instant.

7. Procédé selon la revendication 6, la valeur de contrôle étant constituée par une valeur de hachage (HASH).

8. Procédé selon la revendication 6, une valeur de référence étant calculée en fonction d'une séquence de marquage de flux de contrôle de référence.

9. Procédé selon la revendication 6, la valeur de référence étant constituée par une valeur de hachage (HASHREF) de référence.

10. Procédé selon la revendication 6 et 8, un déroulement de programme erroné étant identifié lorsque la valeur de contrôle calculée ne coïncide pas avec la valeur de référence calculée ou lorsque la valeur de contrôle calculée n'est pas contenue dans un ensemble de valeurs de référence calculées.

11. Dispositif pour identifier un déroulement de programme erroné d'un programme, comprenant :
a) un dispositif destiné à générer une séquence de marquage de flux de contrôle pendant un déroulement de programme du programme, un marquage de flux de contrôle de la séquence de marquage de flux de contrôle étant constitué par une adresse d'instruction d'une instruction de programme ;
b) un dispositif destiné à identifier un déroulement de programme erroné du programme lorsque la séquence de marquage de flux de contrôle générée ne coïncide pas avec une séquence de marquage de flux de contrôle de référence mise en mémoire ou lorsque la séquence de marquage de flux de contrôle générée n'est pas contenue dans un ensemble de séquences de marquage de flux de contrôle de référence mises en mémoire, le dispositif destiné à identifier un déroulement de programme erroné étant conçu pour calculer respectivement une valeur de contrôle, la valeur de contrôle étant constituée respectivement par l'intermédiaire d'une partie de longueur constante de la séquence de marquage de flux de contrôle générée jusqu'à cet instant.

12. Programme informatique comportant des instructions de programme de sécurisation insérées pour la sécurisation contre des manipulations de flux de contrôle et qui sont prévues pour générer et contrôler une séquence de marquage de flux de contrôle, un marquage de flux de contrôle de la séquence de marquage de flux de contrôle étant constitué par une adresse d'instruction d'une instruction de programme et une instruction de programme de sécurisation (S-PB) calculant respectivement une valeur de contrôle, et la valeur de contrôle étant respectivement constituée par l'intermédiaire d'une partie de longueur constante de la séquence de marquage de flux de contrôle générée jusqu'à cet instant.

13. Support de données sur lequel est stocké un programme informatique selon la revendication 12.
